# EUROPÄISCHE PATENTSCHRIFT

(11) **EP 1 914 432 B1**
(45) Veröffentlichungstag und Bekanntmachung des Hinweises auf die Patenterteilung: **07.03.2012**
(21) Anmeldenummer: 07118585.4
(22) Anmeldetag: 16.10.2007
(51) Int. Cl.: F16D 7/04

(54) **Sicherheitseinrichtung zur Vermeidung von Beschädigungen einer Vorrichtung zur Übertragung von Drehmomenten**
Safety device for preventing damage to a device for torque transmission
Dispositif de sécurité destiné à éviter des dommages sur un dispositif de transmission de couples

(30) Priorität: 19.10.2006 DE 102006049367
(43) Veröffentlichungstag der Anmeldung: 23.04.2008
(73) Patentinhaber: Dr. Schneider Kunststoffwerke GmbH, 96317 Kronach (DE)
(72) Erfinder: Gagel, Kilian, 96247 Michelau (DE); Foertsch, Torsten, 96328 Küps (DE)
(74) Vertreter: Pröll, Jürgen

(56) Entgegenhaltungen:
- DE-A1- 4 119 748
- DE-U1-202004 004 229
- DE-U1-202005 012 570
- FR-A- 1 242 424
- GB-A- 2 054 725

## Beschreibung

Die Erfindung betrifft eine Sicherheitseinrichtung zur Vermeidung von Beschädigungen einer Vorrichtung zur Übertragung von Drehmomenten von einem manuellen oder motorischen Antrieb mittels einer Antriebswelle auf ein drehbar gelagertes Bauteil mit den im Oberbegriff des Anspruchs 1 angegebenen Merkmalen.

Es ist bekannt, drehmomentabhängige Kupplungen zur Sicherung der Ab- oder Antriebsseite eines Gerätes gegen zu hohe Drehmomente oder Drehmomentenstöße einzusetzen. Diese drehmomentabhängigen Kupplungen sind für ein maximales Drehmoment auszulegen, bei dessen Überschreitung sich die Verbindung der Wellen löst. Solche Kupplungen und gattungsgemäße Sicherheitseinrichtungen sind für bestimmte Einsätze aus der DE 43 37 750 A1, der DE 41 19 748 A1 und der DE 199 53 484 A1 als axial wirkende Kupplungen bekannt. Sicherheitseinrichtungen mit radial wirkenden Kupplungen sind aus der US 2006/0025224 A1, der DE 43 44 151 A1, der DE 77 12 518 U1, der DE 37 16 105 C1 und der DE 30 12 783 C2 bekannt.

Aus FR-A-1.242.424 ist eine Kupplung zum Begrenzen des Drehmomentes bekannt. Das Antriebselement steht hierbei unter einer elastischen Kraft, welche geregelt über eine Feder in das andere Element der Kupplung eingreift. Hierfür sind am anderen Element Rillen vorgesehen, in welche Bolzen eingreifen, die federnd gelagert sind. Im Weiteren ist eine Reibungsbremse vorgesehen, die radial wirksam ist und welche die relativen Bewegungen zwischen den beiden Kupplungselementen hemmt. Die Reibungsbremse wird durch elastische Stützen des Getriebeelementes kontrolliert. Dies sind an einer Bremstrommel angeordnete Bremsschuhe, die geneigt zur Außenseite des Kupplungselementes angeordnet sind und die mit einem zweiten zylindrischen Kupplungselement verbunden sind. Die zwei Getriebeelemente sind mit jedem Bremsschuh verbunden. Die beiden Seitenflächen der Eingriffsrillen haben verschiedene Schrägen. Die eine Schrägfläche weist eine ausgeprägte Schräge auf, die der Neigung eines V entspricht. Die Vorspannungen der Federn werden so gewählt, dass für die normale Position der Kupplungselemente das Reibungsmoment, das auf die Reibungsfläche übertragen wird, ungefähr 10 % bis 20 % des Drehmoments beträgt.

Analog zu den Rutschkupplungen lassen sich auch Dauermagnetkupplungen als verschleiß- und reibungsfreie Drehmomentenbegrenzer einsetzen. Drehmomentabhängige Kupplungen mit Formgehemmen weisen nach dem Lösen über einen begrenzten Drehwinkel im Allgemeinen ein deutlich niedrigeres Drehmoment auf. Nach Absenken des Drehmomentes und Wiedereinrasten sind auch diese Kupplungen wieder voll funktionsfähig. Die bekannten drehmomentabhängigen Kupplungen sind relativ kompliziert aufgebaut und für vollständige Drehbelastungen ausgelegt und können nicht beliebig klein ausgeführt werden.

Bei hand- oder motorangetriebenen Verschließsystemen für Durchgriffe und Schächte verschiedenster Art, beispielsweise auch für Luftdüsen zum Leiten eines Luftstromes aus einem Luftzuführschacht oder einer Leitung in Heizungs-, Lüftungs- oder Klimaanlagen, insbesondere in Kraftfahrzeugen, in den Innenraum können durch Unachtsamkeit zwischen die sich bewegenden Körper und/oder zwischen das feste Gehäuse und die Körper Gegenstände oder auch Finger gelangen, die eine Fortbewegung verhindern. Da die Teile in der Regel aus Kunststoff bestehen und nicht für hohe Belastungen ausgelegt sind, kann nicht ausgeschlossen werden, dass Teile des Übertragungsgetriebes oder die Zahnstangen als Folge eines solchen Eingriffs zerstört werden, so dass ein Austausch der ganzen Mechanik erforderlich ist, wenn es zu einer solchen Fehlbedienung kommt.

Bei Luftdüsen, die ein Gehäuse aufweisen, das in einem Wanddurchbruch einsetzbar ist und das eine vorderseitige Luftausströmöffnung und einen rückseitigen Anschluss für einen Luftzuführschacht oder eine Luftzuführleitung aufweist, ist es üblich, in das Gehäuse vorderseitig mehrere Horizontal- und/oder dahinter liegend Vertikallamellen parallel und verschwenkbar anzuordnen, um eine gewünschte Strömungsrichtung der Luft zu erreichen. Solche Anordnungen, bei denen die Lamellen über Koppelelemente miteinander und mit einem Antrieb verbunden sind, sind beispielsweise aus der DE 20 2005 012 570 U1 bekannt. Aus dieser Schrift ist auch bekannt, dass eine Verschließklappe über einen Mechanismus mit betätigt werden kann. Zu diesem Zweck sind Verbindungsgetriebe vorgesehen.

Bei anderen Ausführungsformen gemäß DE 20 2004 004 229 U1 und 20 2004 013 430 U1 können in einer walzenförmigen Düsenanordnung auch drehbare trommelförmige Einsätze mit Luftleitmitteln vorgesehen sein. Auch hier kann beim Drehen des trommelförmigen Einsatzes ein Gegenstand zwischen Trommelwand und Gehäusewand geraten, so dass bei mechanischer Überbelastung Teile des Getriebes zerstört werden können. Die Gefahr ist umso größer, wenn elektromotorische Antriebe zum Verstellen der Luftleitmittel zum Einsatz kommen, die beispielsweise über PLUS-MINUS-Tasten, ein Stellrad mit elektrischer Umsetzung oder über eine zentrale Steuereinheit im Fahrzeug gesteuert werden. Kommt der Antrieb beispielsweise zum Einsatz für Horizontallamellen, die über ein Kupplungselement miteinander synchron verschwenkt werden, so ist dieses Kupplungselement entweder über eine integrierte Zahnstange mit dem Drehantrieb verbunden oder aber über ein bogenförmiges Zahnelement, das in ein Ritzel des Drehantriebes eingreift. Um eine Rückstellung zu ermöglichen, sind die Motoren in der Regel in beide Drehrichtungen steuerbar, so dass die Drehbewegung in beide Richtungen erfolgt, wobei die Drehbewegung in eine longitudinale Bewegung umgesetzt wird, die wiederum in eine Schwenkbewegung transformiert wird.

Auch Briefkästen lassen sich nach dem gleichen Prinzip mit schwenkbaren Klappen versehen, ebenso Abdeckklappen von Verstauräumen in PKW's oder LKW's. Diese können darüber hinaus auch mit Näherungssensoren betätigt werden. Bei Klappen, Lamellen und anderen Abdeckungselementen sowie Trommeldüsen sind in der Regel nur Schwenkbewegungen bis 180° erforderlich, um die gewünschten Funktions-änderungen, z. B. die Luftausströmrichtung, vorzunehmen.

Um eine Gefährdung der Getriebebauteile rotationsangetriebener Einrichtungen und auch eine Verletzungsgefahr zu vermeiden, liegt der Erfindung die Aufgabe zugrunde, eine Sicherheitseinrichtung anzugeben, die zwischen An-und Abtriebsseite, nämlich zwischen einer Antriebsvorrichtung und dem Stellgetriebe, zwischengefügt werden kann, um eine Zerstörung von Getriebeteilen oder eine Verletzung bei Berührung mit den bewegten Verschließ-oder Verstellteilen, die mit dem Antrieb gekoppelt sind, zu vermeiden, und gegenüber bekannten Sicherheitseinrichtungen mit radial wirkenden Kupplungen einfacher aufgebaut ist.

Die Aufgabe löst die Erfindung durch Ausgestaltung der Sicherheitseinrichtung gemäß der im Anspruch 1 angegebenen Lehre.

Vorteilhafte Weiterbildungen der Erfindung sind in den Unteransprüchen im Einzelnen angegeben.

Die Sicherheitseinrichtung, die aus zwei relativ gegeneinander verdrehbaren, ineinandergefügten Elementen besteht und preiswert aus Kunststoff gefertigt werden kann, verhindert, dass beim Gelangen eines zu verstellenden Elementes gegen ein Hindernis der Motor oder Antrieb weiterdrehen kann, ohne dass eine Überlastung der Getriebeelemente erfolgt. Das Weiterfahren des Motors wird durch die Nachlaufzeit des Motors bis zum Erreichen des maximalen Auslenkwinkels der ineinandergefügten, relativ zueinander verdrehbaren Elemente bestimmt. Das eine Element ist dabei mit dem drehbar gelagerten Bauteil auf der Abtriebsseite verbunden, während das zweite Element mit der Antriebsseite und dort mit dem Antrieb gekoppelt ist. Zwischen den beiden Elementen ist mindestens ein radial oder axial wirkendes, mit Überschreiten eines bestimmten Drehmomentes ausrastbares Kupplungselement zwischengefügt. Wird ein bestimmtes Drehmoment überschritten, beispielsweise infolge des Zwischenschiebens eines Gegenstandes zwischen das schwenkbare oder drehbare Element und einer Gehäusewand, so gewährleistet die Sicherungseinrichtung, dass das Kupplungselement ausrastet und ein Weiterdrehen für den Restwinkelbereich erfolgt, welcher Restwinkelbereich durch die Motorsteuerung vorgesehen ist. Im Falle der Rückstellung, also der Richtungsänderung, rastet das Kupplungselement wieder in die Ausnehmung ein, wenn diese erreicht wird, so dass ein synchrones Mitdrehen wieder erfolgt.

Ist darüber hinaus vorgesehen, dass das Kupplungselement auf einer Bremsbahn entlang gleitet, so wird bei der Rückführung bzw. beim Zurückdrehen des Motors über das Kupplungselement sofort eine Rückdrehung unter Beachtung der Andruckkräfte und Reibkraft zwischen der Bremsfläche und dem Kupplungselement bewirkt und darüber ein Verschwenken der zu steuernden Mittel.

Als Kupplungselemente werden radial wirkende Kupplungen eingesetzt. Als Kupplungselemente können verschiedene Ausführungen zur Anwendung kommen. Bewährt hat sich, dass mindestens ein Kupplungselement ein federbelastetes Rastelement mit in Drehrichtung der Elemente gebogener oder halbkugelrunder Form oder Keilform und an dem einen Element vorgesehen ist, während eine formangepasste Ausnehmung in dem zweiten Element eingebracht ist. Die Passung und die Federkraft sind dabei so dimensioniert, dass bei Überschreiten eines definierten Drehmomentes die Rastelemente aus den Rastausnehmungen herausgleiten und unter der Federwirkung auf einer Bremsfläche an dem Element, an dem sich die Ausnehmung befindet, entlang gleiten. Die Bremsfläche ist mit einem Anschlag zur Begrenzung des Gleitweges versehen. Der Winkel, der überstrichen wird, entspricht zwischen Anschlag und Ausnehmung dem Winkel der maximalen Verstellung in der einen Drehrichtung. Dies kann auch in der anderen Drehrichtung vorgesehen sein.

Als Getriebe können verschiedene Getriebeausführungen, bis hin zum Zahnstangengetriebe zum Einsatz kommen. Auch kann auf der Antriebsseite der Antrieb über ein Zahnstangengetriebe erfolgen. Zu diesem Zweck kann beispielsweise das zweite Element ein fest montiertes oder ausgeformtes Ritzel aufweisen, in das eine Zahnstange eingreift, die ihrerseits von einem anderen Ritzel verschoben wird. Die Bremsflächen werden entsprechend den Anordnungen der Kupplungselemente radial oder axial in die Wand des anderen Elementes eingearbeitet. Sie können dabei so vertieft oder einschnürend vorgesehen sein, dass zum Anschlagsende hin das Drehmoment stets geringer wird.

Die Vorrichtung kann sowohl in die eine Richtung als auch in die andere Drehrichtung vom Antrieb im entkuppelten oder gekuppelten Zustand der Elemente gedreht werden. Dies ist insbesondere dann der Fall, wenn die Sicherheitseinrichtung in Verbindung mit einer Luftdüse mit Horizontal- oder Vertikallamellen eingesetzt wird, die bekanntlich um eine neutrale Lage in beide Richtungen verschwenkt werden können, um in gewünschter Weise einen Luftstrom abzulenken oder diesen auf Personen zu richten. Je nach Ausführungsform der Vorrichtung können im gekuppelten Zustand die Winkelmaße der Schwenkbewegung in die eine oder in die andere Richtung gleich groß oder voneinander abweichend ausgelegt sein.

Die Antriebssteuerung bewirkt immer nur die maximale Schwenkbewegung in die eine oder in die andere Richtung. Innerhalb dieser Schwenkbewegung kann dann die Sicherheitseinrichtung einwirken, falls auf der Abgangsseite Hindernisse auftreten, gegen die die zu betätigenden Bauelemente laufen. Als besonders vorteilhaft hat es sich erwiesen, dass das erste und das zweite Element der Sicherheitseinrichtung einen Lagerabschnitt aufweisen, mit dem das Element drehbar in einem konturenangepassten Lager eines Gehäuses gelagert ist, das aus zwei Lagerschalen besteht, die miteinander verbindbar sind. Dadurch ist es möglich, die vormontierte Sicherheitseinrichtung in das Gehäuse zu integrieren, bevor der Antriebsmotor mit seiner Welle in die konturenangepasste Lageröffnung in dem zweiten Element eingeschoben wird. Um eine Mitnahme sicherzustellen, kann es sich hierbei um eine polygonale Bohrung handeln, in die ein Zapfen mit angepasstem polygonalen Querschnitt eingesteckt wird. Die Lagerungsbohrung kann in einem zylinderförmigen Verlängerungsstück eingebracht sein, das seinerseits in das erste Element in einer Lagerbohrung eingeführt und darin sicher gehalten wird. Dies kann beispielsweise durch Verrastungen sichergestellt werden. Wenn durch stirnseitige Begrenzungen ein Auseinanderfallen der Verbindung der beiden Elemente, die die Sicherheitseinrichtung bilden, nicht gegeben ist, können diese auch lose miteinander verbunden sein. Ferner kann am ersten Element ein Mitnahmekranz vorgesehen sein, der vorstehende Mitnahmeansätze und/oder Befestigungseinrichtungen zum Fixieren in konturenangepassten Ausnehmungen oder zum Verbinden mit korrespondierenden Befestigungseinrichtungen an einem drehbaren Bauteil, beispielsweise an dem eines Getriebes, aufweist. Solche Mitnahmeansätze können radial an einem Ring vorstehen, der aus der Ringwand des Bauteils ausgeformt ist.

Mit dem drehbaren Bauteil kann auch ein Ritzel gekoppelt sein oder das drehbare Bauteil als solches ein Ritzel aufweisen, so dass hierüber eine Getriebeeinrichtung koppelbar ist, die die Rotationsbewegung in eine Linearbewegung oder eine andere Rotationsbewegung transformiert. In weiterer Ausgestaltung können an dem einen Element auf einem Umfangsring, ausgehend von einer Rastausnehmung, einseitig oder beidseitig Bremsflächen über einen bestimmten Winkel verlaufend angeordnet sein. In dem anderen Element ist eine ringförmige Ausnehmung eingearbeitet, in die der Ring mit der Bremsfläche einsetzbar ist. Das Kupplungs- oder Rastelement steht in die ringförmige Ausnehmung vor. In dem anderen Element ist eine ringförmige Ausnehmung eingearbeitet, in die der Ring mit der Bremsfläche einsetzbar ist. Das Kupplungs- oder Rastelement ist an der ringförmigen Ausnehmung vorstehend an der Innenseite vorgesehen und greift in die Rastausnehmung ein.

Die beiden Teile bestehen aus Kunststoff und können so auf einfachste Weise miteinander verbunden werden, wobei gleichzeitig die gewünschte Rastverbindung oder Rastkupplungsverbindung entsteht, die einen Drehmomentenbegrenzer bildet. Das Kupplungs- oder Rastelement kann dabei an einer dünnwandigen Mantelfläche nach innen vorstehend angebracht sein und rastet unter Ausnutzung der federnden Elastizität des Wandabschnittes in die Ausnehmung ein. Zur Erzielung besonderer Federkräfte kann dieser Abschnitt stirnseitig freigeschnitten sein, so dass ein federnder Wandabschnitt gegeben ist, an dessen Innenseite in Art eines Vorsprungs der Rastansatz hervorsteht und in die Rastausnehmung eingreift. Damit nach dem Ausrasten im Falle der Überlastung das Drehmoment verringert wird, kann dieser Rastansatz dann auf einer Bremsbahn entlang gleiten, die so ausgeführt ist, dass das Drehmoment sich stetig verringert. Das freie Verdrehen erfolgt über den gesamten Winkelbereich, bis das Kupplungs- oder Rastelement an den Anschlag im Endbereich der Bremsfläche bzw. Bremsbahn gelangt, in der die Drehbewegung auch beendet ist. Beim Rückführen gleitet der Rastansatz auf der Bremsfläche entlang und überträgt die Drehbewegung in umgekehrter Richtung, so dass der eingeklemmte Gegenstand wieder freigegeben wird bzw. der Finger aus dem Öffnungsspalt einer Verschließklappe herausgezogen werden kann. Bei weiterer Drehung bis zum maximalen Winkelbereich gleitet das Rastelement wieder in die Rastausnehmung ein, so dass eine Mitnahme erfolgt. Das zweite Element kann einen Lagerabschnitt aufweisen, mit dem das zweite Element im ersten Element drehbar gelagert ist. Das zweite Element kann darüber hinaus einen radial oder axial vorstehenden Anschlag zur Begrenzung der Drehbewegung um den gewünschten Winkel aufweisen, der gegen einen ortsfesten Anschlag im Gehäuse bzw. an einer Trägerwand läuft.

Das Kupplungselement kann aber auch durch eine Kugel realisiert werden, die von einer Druckfeder hintergriffen wird. Die Kugel ist dabei in einem Führungskanal radial oder axial zur Bremsfläche oder der Ausnehmung verlaufend verschiebbar gelagert, so dass auch hierüber die gewünschte Kupplung sichergestellt ist und zugleich die Sicherheitseinrichtung in gewünschter Weise wirkt.

Es kann aber auch vorgesehen sein, dass bei axialer Anordnung des Kupplungselementes auf die Elemente in axialer Richtung eine Feder wirkt, die beim Ausrasten des Kuppelelementes gespannt wird, wenn ein bestimmtes Drehmoment überschritten ist. Es versteht sich in diesem Fall, dass die Verbindung zwischen den Teilen so auszulegen ist, dass die Überstandshöhe des Kupplungselementes beim Auseinanderrücken erreicht wird.

Besonders bewährt hat sich der Einsatz einer Sicherheitseinrichtung nach der Erfindung in Verbindung mit dem Antrieb von Luftdüsen, insbesondere auch dem elektromotorischen Antrieb von Luftdüsen zum Leiten eines Luftstroms aus einem Luftzuführschacht oder einer Leitung in Heizungs-, Lüftungs- oder Klimaanlagen, insbesondere in Kraftfahrzeugen. Solche Luftdüsen weisen ein Gehäuse mit einer vorderseitigen Luftausströmöffnung und mit einem rückseitigen Anschluss für einen Luftzuführschacht oder einer Luftzuführleitung auf. Zwischen Antrieb und Getriebe der in dem Gehäuse vorgesehenen verschwenkbaren lamellenförmigen Luftleitmittel oder einem verschwenkbaren trommelförmigen oder runden Einsatz mit lamellenförmigen Luftleitmitteln ist die Sicherheitseinrichtung eingefügt und damit integrierter Bestandteil des Antriebs bzw. Getriebes. Dabei wirkt die Sicherheitseinrichtung völlig unabhängig von dem Folgegetriebe oder den zusätzlichen Getriebeteilen zum Antrieb weiterer Verstellelemente, wie beispielsweise auch die Luftklappe im Luftzuführschacht oder Vertikallamellen.

Die Antriebseinrichtung kann ein von Hand betätigtes Stellrad sein, das um einen bestimmten Winkel in die eine oder andere Richtung verdreht werden kann. Es kann sich aber auch um einen elektromotorischen Antrieb handeln. Es kann ferner ein Antrieb sein, der ein Zahnstangengetriebe aufweist und eine longitudinale Bewegung zunächst in eine Rotationsbewegung umsetzt, die dann von der Sicherheitseinrichtung übertragen wird. Dem Fachmann werden hier mannigfaltige Ausführungen eröffnet.

Die Erfindung wird nachfolgend anhand des in den Zeichnungen dargestellten Ausführungsbeispieles ergänzend erläutert.

In den Zeichnungen zeigen:
- FIG 1 bis 6: ein Ausführungsbeispiel einer Sicherheitseinrichtung, die erfindungsgemäß ausgelegt ist und sich insbesondere durch eine kleine Bauform auszeichnet,
- FIG 1: eine perspektivische Darstellung des ersten Elementes der Sicherheitseinrichtung,
- FIG 2: eine perspektivische Darstellung des zweites Elementes, das mit dem ersten Element durch Einsetzen verbindbar ist,
- FIG 3 und 4: die in den Figuren 1 und 2 dargestellten Elemente in umgekehrter Richtung perspektivisch,
- FIG 5: die Darstellung der Bremsflächen bei der Ausführung der ersten Elemente gemäß Figuren 1 und 3,
- FIG 6: die Draufsicht auf das zweite Element mit dem federnden Rastelement,
- FIG 7 und 8: das in FIG 6 gezeigte Element 1 in zwei perspektivischen Darstellungen mit einem zusätzlich aufgebrachten Zahnrad und
- FIG 9: eine Explosionszeichnung in perspektivischer Darstellung einer weiteren Sicherheitseinrichtung nach der Erfindung.

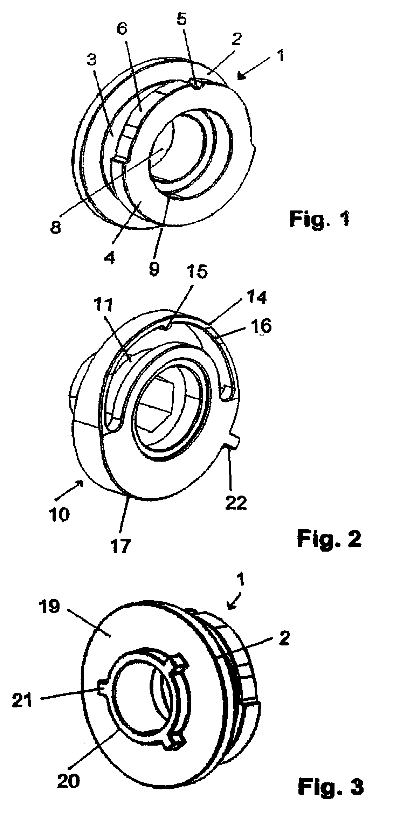

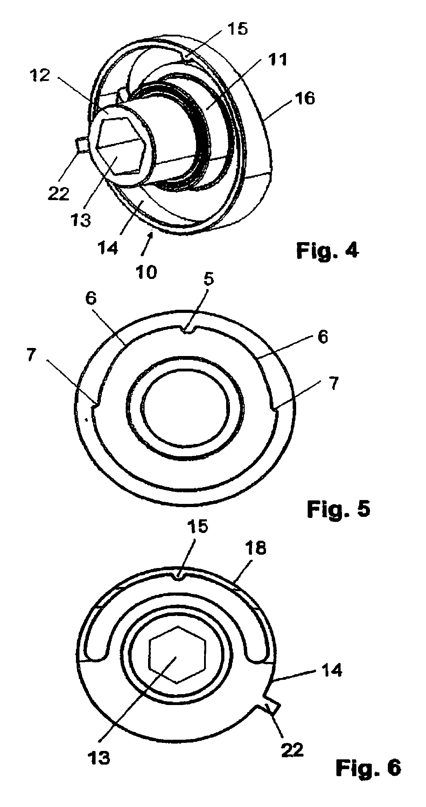

Das in den Figuren 1, 3 und 5 dargestellte erste Element 1 besteht aus einem Ringflansch 2, dem sich ein runder Lagerabschnitt 3 anschließt, mit dem das Element in ein konturenangepasstes Lager eines Gehäuses eingesetzt werden kann. Dem Lagerabschnitt 3 schließt sich ein Kupplungsring 4 an, der an der Oberseite eine Rastausnehmung und sich anschließende, aus Figur 5 deutlich sichtbare Bremsflächen 6 aufweist, die symmetrisch zur Mittenachse angeordnet sind und sich im Durchmesser verjüngen bis zu den Anschlägen 7, die die Bremsflächen in Drehrichtung begrenzen. Es ist ferner aus der Darstellung in Figur 1 ersichtlich, dass das Element 1 eine mittige Lagerungsbohrung 8 aufweist und eine zylinderförmige konzentrische Bohrung 9 größeren Durchmessers, in die der Lageransatz 11 des in den Figuren 2, 4 und 6 dargestellten zweiten Elementes 10 eingreift, wenn das zweite Element 10 mit dem verlängerten Lageransatz 12 mit Sechskantinnenführung 13 zur Aufnahme eines Sechskantzapfens eines Antriebmotors in die Lagerungsbohrung 8 eingesteckt wird. Die Besonderheit an dem zweiten Element 10 besteht nun darin, dass dieses einen Überwurfring 14 aufweist, der die Bremsfläche an dem Kupplungsring 4 und damit diesen übergreift. Im unteren Halbbogenabschnitt liegt die Innenfläche des Überwurfringes gleitend an der Unterseite des Kupplungsringes an. Im oberen Bereich ist durch die Formgebung der Bremsflächen ein Abstand hergestellt. Das Rastelement 15, das das Kupplungselement bildet und an der Innenseite des Überwurfringes vorsteht, rastet in die Ausnehmung 5 beim Zusammenschieben ein. Der obere Teil des Überwurfringes 14 ist freigeschnitten, und zwar durch Schrägverlauf der Oberkantenfläche 16, so dass dieser Teil elastisch ist und verformt werden kann. Dazu ist die Stirnfläche 17 im oberen Abschnitt des Elementes 10 unterbrochen. Der Freischnitt in seiner Länge ist identisch mit der Länge der Bremsflächen 6 am ersten Element 1. Der rahmenförmige Teil 18 des Überwurfringes 14 bildet also eine formangepasste Feder, so dass der Rastansatz 15 in die Ausnehmung 5 unter Federkraft einrastet.

Zurückkommend auf das erste Element 1 sei darauf hingewiesen, dass an der Stirnfläche 19 des Ringflansches 2 ein ringförmiger Ansatz 20 mit Ansätzen 21 vorstehend vorgesehen ist, der an eine konturenangepasste Ausnehmung an dem hiermit kuppelbaren, drehbaren Bauteil des Folgegetriebes, z. B. dem Getriebe an einer Düse für Kraftfahrzeuge, ankuppelbar ist.

Es ist ersichtlich, dass im eingesetzten Zustand die Sicherungseinrichtung sich mit dem Sechskantzapfen dreht. Entsprechend der Steuerung erfolgt dabei eine Links/Rechtsdrehung um einen bestimmten Winkel. Wird über das Getriebe, das nicht dargestellt ist, festgestellt, dass eine Überlastung auftritt, rastet das Rastelement 15 aus der Ausnehmung 5 aus und gleitet auf der Bremsfläche 6 entlang bis zum Anschlag bzw. endet schon vorher, falls die Motorsteuerung schon den Endwinkel erreicht haben sollte. Bei der Rückdrehung wird automatisch durch die auftretende Mitkupplung erreicht, dass das erste Element verdreht wird. Dabei gelangt bei weiterem Drehen das Rastelement 15 wieder in Eingriff mit der Ausnehmung 5. Um ein Überdrehen des Antriebes zu vermeiden, ist ferner am zweiten Element 10 ein Anschlag 22 vorgesehen, der gegen einen nicht dargestellten Anschlag im Gehäuse läuft.

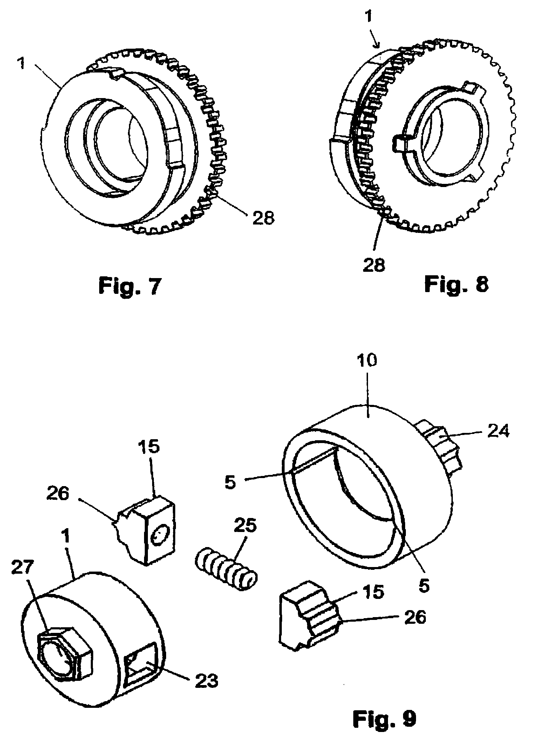

In den Figuren 7 und 8 ist ein erstes Element 1 der Sicherheitseinrichtung nach der Erfindung dargestellt, wie es aus den Figuren 1, 3 und 5 hervorgeht. Dieses Element 1 weist jedoch ergänzend ein Zahnrad 28 auf, so dass hierüber eine Krafteinleitung oder auch Kraftabgabe erfolgen kann. Dieses Zahnrad kann entweder mit einer Zahnstange zusammenwirken oder mit einem weiteren Zahnrad eines Getriebes. Das Beispiel verdeutlicht, dass die Elemente der Sicherheitseinrichtung noch zusätzliche Funktionen ausüben können.

In Figur 9 ist ein weiteres Beispiel einer Sicherheitseinrichtung dargestellt. Diese weist ein zylinderförmiges erstes Element 1 auf, an dem eine Befestigungseinrichtung 27 zum Einleiten des Drehmomentes auf ein Drehteil vorgesehen ist. In der Mantelwand befinden sich um 180° versetzt angeordnete Lagerausnehmungen 23, in denen die Rastelemente 15 radial verschiebbar gegen die Kraft einer zwischengefügten Feder 25 gelagert sind. Durch die Abstufung ist sichergestellt, dass die Rastelemente 15 durch den Durchbruch 23 nicht von der Feder herausgedrückt werden können. Die Rastelemente 15 weisen eine Keilform 26 an ihren Stirnseiten auf. Diese Keilform greift in die Ausnehmungen 5 an der Innenseite des Mantels des zweiten Elementes 10 ein. Zu diesem Zweck wird das Element 1 mit den eingesetzten Rastelementen 15 in die Innenbohrung des Elementes 10 eingesetzt. Das Element 10 weist an der Stirnseite zentrisch ein Ritzel 24 auf, über das beispielsweise ein Drehmoment auf das Sicherheitselement ausgeübt wird.

### Bezugszeichenliste

- 1: Element
- 2: Ringflansch
- 3: Lagerabschnitt
- 4: Kupplungsring
- 5: Ausnehmung
- 6: Bremsfläche
- 7: Anschlag
- 8: Lagerungsbohrung
- 9: Bohrung
- 10: zweites Element
- 11: Lageransatz
- 12: verlängerter Lageransatz
- 13: Innenführung
- 14: Überwurfring
- 15: Rastelement
- 16: Oberkantenfläche
- 17: Stirnfläche
- 18: rahmenförmiger Teil
- 19: Stirnfläche
- 20: ringförmiger Ansatz
- 21: Ansatz
- 22: Anschlag
- 23: Lagerausnehmung
- 24: Ritzel
- 25: Feder
- 26: Keilform
- 27: Befestigungseinrichtung
- 28: Zahnrad

## Patentansprüche

1. Sicherheitseinrichtung zur Vermeidung von Beschädigungen einer Vorrichtung zur Übertragung von Drehmomenten von einem manuellen oder motorischen Antrieb mittels einer Antriebswelle auf ein drehbar gelagertes Bauteil, das um ein bestimmtes Winkelmaß in mindestens einer Drehrichtung verdrehbar ist, welche Sicherheitseinrichtung aus zwei relativ gegeneinander verdrehbaren, ineinander gefügten Elementen (1, 10) besteht, wobei das eine Element (1) an dem drehbar gelagerten Bauteil und das zweite Element (10) an der Antriebswelle fixiert sind und ein Element (1 oder 10) mit dem anderen (10 oder 1) über mindestens ein mit Überschreiten eines bestimmten Drehmomentes ausrastbares Kupplungselement (15) gekoppelt ist, und der Antrieb nach dem Auskuppeln das zweite Element (10) mindestens über das verbleibende Winkelmaß relativ gegenüber dem ersten (1) weiterdreht und das mindestens eine Kupplungselement (15) ein radial wirkendes federbelastetes Rastelement mit in Drehrichtung der Elemente (1, 10) gebogener oder halbkugelrunder Form oder einer Keilform (26) ist und an dem einen Element (10 oder 1) vorgesehen ist, während eine formangepasste Ausnehmung (5) in dem anderen Element (1 oder 10) eingebracht ist, wobei die Passungen und die Federkraft derart dimensioniert sind, dass bei Überschreiten eines definierten Drehmomentes das mindestens eine Rastelement (15) aus der mindestens einen korrespondierenden Ausnehmung (5) herausgleitet, **dadurch gekennzeichnet, dass** an dem einen Element (1) auf einem Kupplungsring (4), ausgehend von einer Rastausnehmung (5), einseitig oder beidseitig Bremsflächen (6) über einen bestimmten Winkel verlaufend angeordnet sind, dass das Kupplungselement (15) nach dem Ausrasten unter Federkraft auf einer Bremsfläche (6) an dem Element (1), an dem sich die Ausnehmung (5) befindet, entlang gleitet, und dass in dem anderen Element (10) eine ringförmige Ausnehmung eingearbeitet ist, in die der Kupplungsring (4) mit der Bremsfläche (6) einsetzbar ist, und dass das Kupplungs- (15) oder Rastelement in die ringförmige Ausnehmung vorstehend und in die Rastausnehmung (5) eingreifend vorgesehen ist.

2. Sicherheitseinrichtung nach Anspruch 1, **dadurch gekennzeichnet, dass** die Bremsfläche (6) einen Anschlag (7) zur Begrenzung des Gleitweges aufweist.

3. Sicherheitseinrichtung nach Anspruch 2, **dadurch gekennzeichnet, dass** die Bremsfläche (6) derart in die Wandung des Elementes (1) radial eingearbeitet ist, dass die Bremsreibkraft zum Ende der Bremsfläche (6) hin abnimmt.

4. Sicherheitseinrichtung nach einem der vorhergehenden Ansprüche, **dadurch gekennzeichnet, dass** die Vorrichtung sowohl in die eine Richtung als auch in die andere Drehrichtung vom Antrieb im entkuppelten und/oder gekuppelten Zustand der Elemente (1, 10) drehbar ist.

5. Sicherheitseinrichtung nach Anspruch 6, **dadurch gekennzeichnet, dass** im gekuppeltem Zustand die Winkelmaße der Schwenkbewegungen in die eine oder die andere Drehrichtung gleich groß oder voneinander abweichend vom Antrieb gesteuert vorgegeben sind und dass die Längen der Gleitwege der Kupplungselemente (15) auf der Gleitfläche hiervon abhängig ausgelegt sind.

6. Sicherheitseinrichtung nach einem der vorhergehenden Ansprüche, **dadurch gekennzeichnet, dass** das erste Element (1) oder das zweite Element (10) einen Lagerabschnitt (3) aufweist, mit dem das erste Element (1) in einem konturenangepassten Lager eines Gehäuses, das aus zwei Lagerschalen besteht, die miteinander verbindbar sind, drehbar gelagert ist.

7. Sicherheitseinrichtung nach einem der vorhergehenden Ansprüche, **dadurch gekennzeichnet, dass** an dem ersten Element (1) ein Mitnahmekranz (20) vorgesehen ist, der vorstehende Mitnahmeansätze (21) und/oder Befestigungseinrichtungen (27) zum Fixieren in konturenangepassten Ausnehmungen oder zum Verbinden mit korrespondierenden Befestigungseinrichtungen an einem drehbaren Bauteil aufweist.

8. Sicherheitseinrichtung nach einem der vorhergehenden Ansprüche, **dadurch gekennzeichnet, dass** mit dem drehbaren Element (1, 10) ein Ritzel und/oder ein Zahnrad gekoppelt ist oder das drehbare Element (1, 10) ein solches Ritzel (24) oder Zahnrad (28) aufweist und dass hiermit eine Getriebeeinrichtung gekoppelt ist, die die Rotationsbewegung in eine Linearbewegung oder eine andere Rotationsbewegung transformiert.

9. Sicherheitseinrichtung nach Anspruch 1, **dadurch gekennzeichnet, dass** mindestens über den maximalen Schwenkwinkel verlaufend das zweite Element (10) mit dem Kupplungs- oder Rastelement (15) eine federnde Mantelwand oder eine an der Stirnverbindungswand (17) freigeschnittene Mantelwand aufweist, deren Eigenelastizität die Federkraft für die Herstellung der Rastkupplung aufbringt.

10. Sicherheitseinrichtung nach Anspruch 9, **dadurch gekennzeichnet, dass** die ringförmige Mantelwand des Überwurfringes (14) derart abgeschrägt freigeschnitten ist, dass der Mantelwandabschnitt, an dem das Rastelement (15) sich befindet, in axialer Richtung wesentlich schmaler als die übrige Mantelwand der Lagerungsausnehmung in Form eines Überwurfringes (14) ist.

11. Sicherheitseinrichtung nach Anspruch 1, 9 oder 10, **dadurch gekennzeichnet, dass** das Rastkupplungselement (15) sich an dem zweiten Element (10) befindet, das mit dem Antrieb gekoppelt ist.

12. Sicherheitseinrichtung nach Anspruch 11, **dadurch gekennzeichnet, dass** das zweite Element (10) einen Lagerabschnitt (12) aufweist, mit dem das zweite Element(10) im ersten Element (1) drehbar gelagert ist.

13. Sicherheitseinrichtung nach einem der vorhergehenden Ansprüche, **dadurch gekennzeichnet, dass** in dem zweiten Element (10) eine polygone Lagerungsbohrung (13) für die Aufnahme eines konturenangepassten Zapfens vorgesehen ist.

14. Sicherheitseinrichtung nach einem der vorhergehenden Ansprüche, **dadurch gekennzeichnet, dass** das zweite Element (10) einen radial vorstehenden Anschlag (22) zur Begrenzung der Drehbewegung aufweist, der gegen einen ortsfesten Anschlag in einem Gehäuse läuft, in das die Sicherheitseinrichtung eingebaut ist.

15. Sicherheitseinrichtung nach Anspruch 1, **dadurch gekennzeichnet, dass** das Kupplungselement eine Kugel ist, die von einer Druckfeder hintergriffen ist, welche Kugel in einem Führungskanal radial zur Bremsfläche und/oder in der Ausnehmung verlaufend verschiebbar gelagert ist.

16. Sicherheitseinrichtung nach einem der Ansprüche 1 bis 17, **dadurch gekennzeichnet, dass** die Teile und Elemente der Sicherungseinrichtung aus Kunststoff gefertigt und zusammengesetzt sind.

17. Sicherheitseinrichtung nach einem der vorhergehenden Ansprüche, **dadurch gekennzeichnet, dass** sie in einer Luftdüse zum Leiten eines Luftstromes aus einem Luftzuführschacht oder einer Leitung in Heizungs-, Lüftungs- oder Klimaanlagen, insbesondere in Kraftfahrzeugen, aufweisend ein Gehäuse mit einer vorderseitigen Luftausströmöffnung und einem rückseitigen Anschluss für einen Luftzuführschacht oder eine Luftzuführleitung, zwischen Antrieb und Getriebe der in dem Gehäuse vorgesehenen verschwenkbaren lamellenförmigen Luftleitmittel oder einen verschwenkbaren trommelförmigen Einsatz mit lamellenförmigen Luftleitmitteln eingesetzt ist.

18. Sicherheitseinrichtung nach Anspruch 17, **dadurch gekennzeichnet, dass** die Antriebseinrichtung ein Stellrad, das aus der Abdeckung der Luftdüse zum Bedienen hervorsteht, oder ein elektromotorischer Antrieb ist, der über eine Steuereinrichtung beim Betätigen von Einstellgliedern eine Rotationsbewegung auf die Sicherheitseinrichtung überträgt.

## Claims

1. Safety device for avoiding damage to a device for transmission of torque from a manual or motorised drive by means of a drive shaft to a rotatably mounted component rotatable in at least one rotational direction through a defined angular amount, which safety device consists of two relatively rotatable elements (1, 10) engaged one in the other, wherein one element (1) is fixed to the rotatably mounted component and the second element (10) fixed to the drive shaft and one element (1 or 10) is coupled with the other element (10 or 1) by way of at least one coupling element (15) which can be brought out of detenting when a specific torque is exceeded, and the drive after decoupling further rotates the second element (10) at least over the remaining angular amount relative to the first element (1) and the at least one coupling element (15) is a radially acting springloaded detent element with a shape curved in rotational direction of the elements (1, 10) or a hemispherical shape or a wedge shape (26) and is provided at the one element (10 or 1), whilst a recess (5) of matching shape is formed in the other element (1 or 10), wherein the fits and spring force are so dimensioned that when a defined torque is exceeded the at least one detent element (15) slides out of the at least one corresponding recess (5), **characterised in that** brake surfaces (6) are arranged at the one element (1) on a coupling ring (4) to go out from a detent recess (5) and extend over a defined angle on one side or both sides, that the coupling element (15) after being brought out of detenting slides under spring force along a brake surface (6) at the element (1) where the recess (5) is present and that formed in the other element (10) is an annular recess in which the coupling ring (4) with the brake surface (6) is insertable, and that the coupling element (15) or detent element is provided to protrude into the annular recess and engage in the detent recess (5).

2. Safety device according to claim 1, **characterised in that** the brake surface (6) has an abutment (7) for limitation of the slide path.

3. Safety device according to claim 2, **characterised in that** the brake surface (6) is radially formed in the wall of the element (1) in such a manner that the braking frictional force reduces towards the end of the brake surface (6).

4. Safety device according to any one of the preceding claims, **characterised in that** the device is rotatable not only in one direction, but also in the other rotational direction by the drive in the decoupled and/or coupled state of the elements (1, 10).

5. Safety device according to claim 6, **characterised in that** in the coupled state the angular amount of the pivot movements in the one or the other rotational direction are predetermined in controlled manner by the drive to be of the same size or to differ from one another and that the lengths of the slide paths of the coupling elements (15) on the slide surface are designed to be dependent thereon.

6. Safety device according to any one of the preceding claims, **characterised in that** the first element (1) or the second element (10) has a bearing section (3) by which the first element (1) is rotatably mounted in a contour-matched bearing of a housing consisting of two bearing shells which are connectible together.

7. Safety device according to any one of the preceding claims, **characterised in that** provided at the first element (1) is an entrainer collar (20) which comprises protruding entrainer projections (21) and/or fastening devices (27) for fixing in contour-matched recesses or for connection with corresponding fastening devices at a rotatable component.

8. Safety device according to any one of the preceding claims, **characterised in that** a pinion and/or gearwheel is or are coupled with the rotatable element (1, 10) or the rotatable element (1, 10) comprises such a pinion (24) or gearwheel (28) and that coupled therewith is a transmission device which transforms the rotational movement into a linear movement or into another rotational movement.

9. Safety device according to claim 1, **characterised in that** the second element (10) with the coupling or detent element (15) has, extending at least over the maximum pivot angle, a resilient circumferential wall or a circumferential wall cut away at the end connecting wall (17), the inherent resilience of the circumferential wall exerting the spring force for production of the detent coupling.

10. Safety device according to claim 9, **characterised in that** the annular circumferential wall of the sleeve ring (14) is so cut away in chamfered manner that the circumferential wall section at which the detent element (15) is disposed is substantially narrower in axial direction than the rest of the circumferential wall of the bearing recess in the form of a sleeve ring (14).

11. Safety device according to claim 1, 9 or 10, **characterised in that** the detent coupling element (15) is disposed at the second coupling element (10), which is coupled with the drive.

12. Safety device according to claim 11, **characterised in that** the second element (10) has a bearing section (12) by which the second element (10) is rotatably mounted in the first element (1).

13. Safety device according to any one of the preceding claims, **characterised in that** a polygonal bearing bore (13) for reception of a contour-matched pin is provided in the second element (10).

14. Safety device according to any one of the preceding claims, **characterised in that** the second element (10) has a radially protruding abutment (22) for limitation of the rotational movement, which abutment runs against a stationary abutment in a housing in which the safety device is incorporated.

15. Safety device according to claim 1, **characterised in that** the coupling element is a ball, behind which engages a compression spring and which is mounted in a guide channel to be displaceable radially with respect to the brake surface and/or running in the recess.

16. Safety device according to any one of claims 1 to 17, **characterised in that** the parts and the elements of the safety device are made and composed of plastics material.

17. Safety device according to any one of the preceding claims, **characterised in that** it is used in an air nozzle for conducting an air flow from an air feed shaft or a duct in heating, ventilating or air-conditioning installations, particularly in motor vehicles, comprising a housing with a frontal air outlet opening and a rear connection for an air feed shaft or an air feed duct, between drive and transmission of the pivotable slat-shaped air guide means, which is provided in the housing, or a pivotable drum-shaped insert with slat-shaped air guide means.

18. Safety device according to claim 17, **characterised in that** the drive device is a setting wheel, which protrudes from the cover of the air nozzle so as to be operable, or an electric-motorised drive, which by way of a control device transmits a rotational movement to the safety device on actuation of setting elements.

## Revendications

1. Dispositif de sécurité destiné à éviter des dommages sur un dispositif de transmission de couples d'un entraînement manuel ou motorisé avec un arbre de transmission sur une pièce à entraînement rotatif qui peut être pivotée dans un angle précis au moins dans un sens de rotation, ce dispositif de sécurité est composé de deux éléments pouvant être relativement tournés l'un vers l'autre et insérés l'un dans l'autre (1,10), un élément (1) étant fixé sur la pièce à entraînement rotatif et le second élément (10) étant fixé sur l'arbre de transmission et un élément (1 ou 10) étant couplé avec l'autre (10 ou 1) sur un élément de couplage (15) pouvant s'embrayer lorsqu'un couple précis est dépassé, et la transmission continuant à faire tourner après le découplage le second élément (10) au moins au dessus de l'angle restant relativement en face du premier (1) et pour lequel au moins un élément de couplage (15) est un élément d'enclenchement avec ressort avec effet radial avec une forme bombée ou une demi-sphère ou un cône (26) en direction de rotation des éléments (1,10) et est prévu sur un élément (10 ou 1) pendant qu'une exclusion (5) est placée dans l'autre élément (1 ou 10), les passages et la force du ressort étant dimensionnés de façon à ce qu'en cas de dépassement d'un couple défini au moins un élément d'enclenchement (15) soit conduit en dehors d'au moins une exclusion correspondante (5),
**caractérisé en cela que** sur un élément (1) sur un anneau de couplage (4) partant d'une exclusion d'enclenchement (5) des surfaces de freinage (6) sont placées sur un côté ou sur deux côtés en passant par un angle précis, que l'élément de couplage (15) glisse sur une surface de freinage (6) le long de l'élément (1) sur lequel l'exclusion (5) se trouve après le découplage sous l'action des ressorts et que dans l'autre élément (10) une exclusion en forme d'anneau a été travaillée dans laquelle l'anneau de couplage (4) peut être utilisé avec la surface de freinage (6) et que l'élément de couplage (15) ou d'enclenchement se trouve avant l'exclusion en forme d'anneau et est prévu de s'encliqueter dans l'exclusion d'enclenchement (5).

2. Dispositif de sécurité selon la revendication 1 **caractérisé en cela que** la surface de freinage (6) présente une butée (7) pour limiter la voie de glissement.

3. Dispositif de sécurité selon la revendication 2 **caractérisé en cela que** la surface de freinage (6) est travaillée dans la paroi de l'élément 1 de façon radiale de sorte que la force de frottement de freinage diminue à la fin de la surface de freinage (6).

4. Dispositif de sécurité selon l'une des revendications précitées **caractérisé en cela que** l'entraînement peut faire tourner le dispositif aussi bien dans une direction que dans une autre lorsque les éléments (1,10) sont découplés et / ou couplés.

5. Dispositif de sécurité selon la revendication 6 **caractérisé en cela qu'**en état de couplage, les angles des mouvements de bascule dans une ou l'autre des directions de rotation sont aussi grands ou sont différents l'un de l'autre en fonction de la commande de l'entraînement et que les longueurs de la voie de glissement des éléments de couplage (15) sont conçues en fonction de la surface de glissement.

6. Dispositif de sécurité selon l'une des revendications précitées **caractérisé en cela que** le premier élément (1) ou le second élément (10) présente une section de roulement (3) avec laquelle le premier élément (1) est positionné de façon rotative dans un roulement aux contours adaptés d'un boîtier composé de deux coques de roulement reliées l'une à l'autre.

7. Dispositif de sécurité selon l'une des revendications précitées **caractérisé en cela que** sur le premier élément (1) une couronne d'entraînement (20) est prévue qui présente les supports d'entraînement précédents (21) et/ou les dispositifs de fixation (27) pour la fixation dans des exclusions aux contours adaptés ou pour la connexion avec des dispositifs de fixation correspondants à une pièce rotative.

8. Dispositif de sécurité selon l'une des revendications précédentes **caractérisé en ce**la qu'un pignon et/ou une roue dentée est couplée avec l'élément rotatif (1,10) ou que l'élément rotatif (1,10) présente un tel pignon (24) ou une roue dentée (28) et qu'un dispositif d'entraînement y soit couplé qui transforme le mouvement de rotation en un mouvement linéaire ou un autre mouvement de rotation.

9. Dispositif de sécurité selon la revendication 1 **caractérisé en cela que** le second élément présente avec l'élément de couplage ou d'enclenchement (15) une paroi à amortisseur passant au moins au-dessus de l'angle maximal de bascule ou au moins une paroi coupée librement sur la paroi de connexion frontale (17) et dont la propre élasticité applique la force de ressort pour créer le couplage d'enclenchement.

10. Dispositif de sécurité selon la revendication 9 **caractérisé en cela que** la paroi en forme d'anneau de l'anneau de raccord (14) est coupée en biais de façon à ce que la coupe de la paroi se trouve contre l'élément d'enclenchement (15) et qu'elle soit dans la direction axiale plus mince que le reste de la paroi de l'exclusion du roulement sous forme d'un anneau de raccord (14).

11. Dispositif de sécurité selon la revendication 1, 9 ou 10 **caractérisé en cela que** l'élément de couplage et d'enclenchement (15) se trouve sur le second élément (10) qui est couplé avec l'entraînement.

12. Dispositif de sécurité selon la revendication 11 **caractérisé en cela que** le second élément (10) présente une section de roulement (12) avec laquelle le second élément (10) est placé dans le premier (1) de façon rotative.

13. Dispositif de sécurité selon l'une des revendications précitées **caractérisé en cela que** dans le second élément (10) une perforation de roulement polygone (13) est prévue pour loger un tourillon aux contours adaptés.

14. Dispositif de sécurité selon l'une des revendications précités **caractérisé en cela que** le second élément (10) présente une butée radiale juste avant (22) pour limiter le mouvement de rotation, cette butée passant contre une butée fixe dans le carter dans lequel le dispositif de sécurité est monté.

15. Dispositif de sécurité selon la revendication 1 **caractérisé en cela que** l'élément de couplage est une bille tenue à l'arrière par un ressort de compression, cette bille étant placée dans un canal de direction radialement par rapport à la surface de freine et/ou de façon à glisser dans l'exclusion.

16. Dispositif de sécurité selon l'une des revendications 1 à 17 **caractérisé en cela que** les pièces et les éléments du dispositif de sécurité sont fabriqués en plastique et assemblés.

17. Dispositif de sécurité selon l'une des revendications précitées **caractérisé en cela qu'**il est utilisé dans une buse à air pour diriger le flux d'air d'un canal d'amenée d'air ou dans une canalisation d'une installation de chauffage, d'aération, ou de climatisation, en particulier dans les voitures, et présente un carte avec une ouverture de ventilation sur l'avant et un branchement à l'arrière pour un canal d'amenée d'air ou une canalisation d'amenée d'air et est placé entre l'entraînement et la boîte de vitesse des moyens de conduction d'air en formes de lamelles basculables prévues dans le carter ou dans un support basculable en forme de tambour avec conducteurs d'air à lamelle.

18. Dispositif de sécurité selon la revendication 17 **caractérisé en cela que** le dispositif d'entraînement est une roue de commande qui est placée en avant sur le cache de la buse à air pour la commande ou est un entraînement à moteur électrique qui transmet un mouvement de rotation au dispositif de sécurité via une dispositif de commande lorsque les éléments de commande sont actionnés.
